(19) Europäisches Patentamt
European Patent Office
Office européen des brevets

(11) EP 0 927 201 B1

(12) EUROPEAN PATENT SPECIFICATION

(45) Date of publication and mention of the grant of the patent:
**14.04.2004 Bulletin 2004/16**

(21) Application number: **97939245.3**

(22) Date of filing: **05.09.1997**

(51) Int Cl.7: **C08F 4/642**, C08F 10/00

(86) International application number:
**PCT/KR1997/000164**

(87) International publication number:
**WO 1998/009996 (12.03.1998 Gazette 1998/10)**

(54) **CATALYST SYSTEM FOR (CO)POLYMERIZATION OF OLEFINS AND PROCESS FOR THE PREPARATION OF OLEFIN (CO)POLYMERS USING THE CATALYST SYSTEM**

KATALYSATORSYSTEM FÜR DIE (CO)POLYMERISIERUNG VON OLEFINEN UND VERFAHREN ZUR HERSTELLUNG VON OLEFIN-(CO)POLYMEREN UNTER VERWENDUNG DES KATALYSATORSYSTEMS

SYSTEME DE CATALYSEUR DESTINE A LA (CO)POLYMERISATION D'OLEFINES, ET PROCEDE DE PREPARATION DE (CO)POLYMERES OLEFINIQUES METTANT EN OEUVRE CE SYSTEME

(84) Designated Contracting States:
**DE FR GB IT NL**

(30) Priority: **06.09.1996 KR 3930996**
**09.01.1997 KR 3100497**

(43) Date of publication of application:
**07.07.1999 Bulletin 1999/27**

(73) Proprietor: **Hyundai Petrochemical Co., Ltd.**
**Chungchongnam-do 356-870 (KR)**

(72) Inventors:
- **LEE, Dong, Hee 202-204, Hyundai Apartment Chungchongnam-do 356-870 (KR)**
- **SHIN, Sang, Young 204-803 Hyundai Apartment Chungchongnam-do 356-870 (KR)**

(74) Representative: **Wakerley, Helen Rachael et al**
**Reddie & Grose,**
**16 Theobalds Road**
**London WC1X 8PL (GB)**

(56) References cited:
**EP-A- 0 582 268**
**EP-A- 0 590 486**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 927 201 B1

Printed by Jouve, 75001 PARIS (FR)

## Description

## Field of the Invention

The present invention relates to a catalyst system for polymerization and copolymerization of olefins and process for the preparation of olefin homo- or co- polymers using the catalyst system. More specifically, the present invention relates to a metallocene catalyst system and process using the catalyst system for producing, with high yield, olefin homo- or co- polymers such as ethylene-propylene rubber(EPR) and linear low density polyethylene(LLDPE), which have high molecular weight and good physical properties, without concurrent use of expensive cocatalysts such as methyl aluminoxane(hereinafter referred to as "MAO"), boron-based cocatalyst, etc.

## Background Art

The stereospecificity of conventional Ziegler-Natta (Z.N) catalyst was controlled by coordinate unsaturation of active compounds for polymerization existing on the surface of solid. In the metallocene catalyst system, however, polymer having atactic(C2v symmetry), syndiotactic(Cs symmetry) or isotactic(C2 symmetry) structure can be prepared simply by changing symmetry of ligands. Homogeneous olefin copolymers having high random characteristics are also obtainable by employing the metallocene catalyst. Furthermore, the catalyst shows high activity towards olefins with bulky substituents, which makes it possible to prepare long chain branched polyethylene without relying on high pressure radical polymerization method. Metallocene catalyst exhibits good polymerization activity for some polar olefins or 1,3-diene, $\alpha,\omega$-diene as well as for cycloolefins such as cyclobutene, cyclopentene, norbornene. Generally, the metallocene catalyst comprises transition metal complex represented by the general formula (I).

$$(CpRn)(CpR'm)MQp \qquad (I)$$

wherein, CpRn or CpR' m is a cyclopentadienyl, indenyl or fluorenyl which is unsubstituted or substituted with one or more alkyl, phosphine, amine, alkyl ether, or allyl ether groups; M is a transition metal from Group IVB ["CRC Handbook of Chemistry and Physics", 68th ed., 1987-1988] or VB of the Periodic Table of Elements; Q is alkyl, allyl, allyl alkyl, amide, alkoxy, halogen, sulphide, phosphide; n, m and p are $0 \le n \le 5$, $0 \le m \le 5$ and $1 \le p \le 4$, respectively.

The metallocene catalyst does not show catalystic activity by itself. Dr. Kaminsky et al. reported that the catalyst exhibited high activity for ethylene polymerization and could produce polymers having narrow molecular weight distribution when excess MAO was used together with. [H, Sinn, W. Kaminsky, H. J. Vollmer, R Woldt, Angew. Chem., 92, 296(1980), H. Sinn, W. Kaminsky, Adv. Organomet. Chem. 18, 99(1980), and W. Kaminsky, K. Kúlper, H. H. Brintzinger, F. R. W. P. Wild, Angew, Chem., Int. Ed. Engl. 24, 507(1987)] The catalyst system, however, is very costly because expensive MAO (approximately 400US$/kg) should be added 2,000-10,000 times more than the amount of the metallocene catalyst. And aluminum remnants in polymer products makes it difficult to analyze quantity of active compounds, reaction mechanism, etc. Thus, the catalyst system is disadvantages for industrial use.

Jordan et al. reported that $[Cp_2ZrMe(THF)^+BF_4^-]$ had ethylene polymerization activity, but it was very low [R. F. Jordan, C. S. Bajgur, R. Willett and B. Scott, J. Am. Chem. Soc., 108, 7410(1986)]. To increase its activity, it is required to form a complex wherein cationic metal center can interact with counter anion as weakly as possible, not involving molecular donation from donor such as THF. In case $RB(C_6F_5)_3^-$ employing fluorine as a counter anion is used, electrostatic interaction with cationic metal center can be weaken due to moderated negative charge of boron.

According to Marks et al, a complex wherein a methyl group of boron was weakly bonded to zirconium was formed when $CH_3B(C_6F_5)_3^-$ was used as a counter anion, and this complex made high active catalyst for olefin polymerization[X-Yang, C. L. Sterm, and T. J. Marks, Angew. Chem. Int. Ed. Eng., 31, 1375(1992)]. The structure has been clarified based on a hydride complex obtainable by adding hydrogen to the complex.

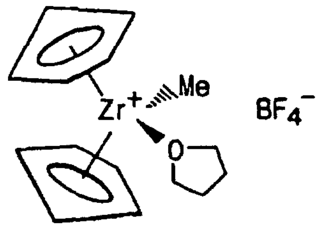

1

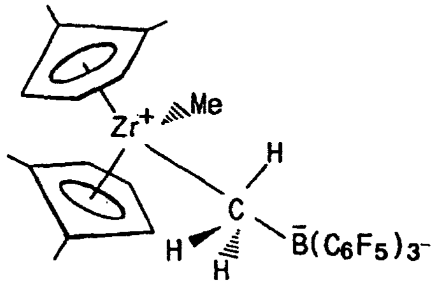

2

(1)

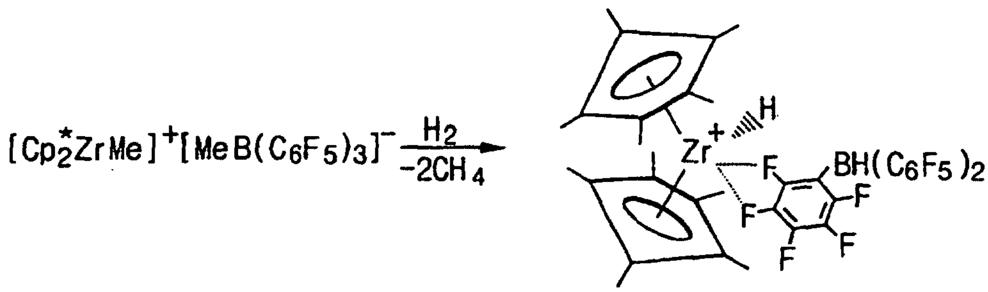


This structure shows that zirconium interacts with ortho- or metha-fluorines of a $C_6F_5$ ring. This complex is regarded as high active compound model produced by β-elimination during olefin polymerization, and also exhibits high activity for polymerization [3200kg PE/mol-Zr h atm, Mn = 1.545 × $10^5$, Mw/Mn = 2.8, 320kg PP/mol-Zr h, Mw/Mn = 1.6].

However, conventional metallocene catalyst systems described above still require excess MAO or boron based cocatalyst that the catalyst systems are not suitable for commercial use. And aluminum remnant is found in polymer products. Therefore, it is keenly needed to develop a cocatalyst substituting for MAO. The present invention is directed to solve such problems in conventional catalyst systems.

Thus, it is an object of the present invention to provide a metallocene catalyst system and process using the catalyst system for producing olefin homo- or co- polymers having a high molecular weight, with high yield, not employing MAO or boron-based cocatalyst. These characteristics of the present invention are advantageous in terms of industrial use, and it is also important considering the catalyst system as it is.

## Brief Description of the Drawings

FIG. 1a is UV-Vis absorption spectrum in case of using rac-ethylene bis(indenyl)zirconium dichloride catalyst, and FIG. 1b is spectrum in case of adding magnesium perchlorate; and

FIG. 2a is DSC (Differential Scanning Calorimeter) spectrum of ethylene-octene copolymer obtained by using a metallocene catalyst bis(n-butylcyclopentadienyl)zirconium dichloride, and FIG. 2b is spectrum of polymer obtained by using Ziegler-Natta catalyst.

## Disclosure of the Invention

To this end, the present invention provides a catalyst system for olefin polymerization and copolymerization comprising (A) at least one metallocene compound derived from a transition metal, (B) at least one cation activator as cocatalyst, and (C) at least one alkylating agent.

Further, the present invention provides a process for preparing copolymers such as ethylene-α-olefin copolymers such as ethylene-propylene copolymer, ethylene-1-octene copolymer, and ethylene-styrene copolymer, ethylene-diene copolymer or ethylene-cycloolefin copolymer as well as olefin homopolymers such as polyolefin, using the catalyst system.

Said component (A) is dialkyl metallocene represented by the formula (Ia) below

$$(CpRn)(CpR'm)MQp \qquad (Ia)$$

where

Cp is a cyclopentadienyl, indenyl or fluorenyl,
Rn and R'm are independently alkyl, phosphine, amine, alkyl ether, or allyl ether groups,
M is a transition metal from Group IVB or VB of the Periodic Table of Elements,
Q is alkyl, allyl, allyl alkyl, amide, alkoxy, halogen, sulphide, phosphide,
n, m and p are $0 \leq n \leq 5$, $0 \leq m \leq 5$ and $1 \leq p \leq 4$, respectively,

bridged metallocene represented by the formula (Ib) below

$$R''(CpRn)(CpR'm)MQp \qquad (Ib)$$

where

Cp, Rn, R' m, M and Q have the same meaning as defined in formula (Ia),
R" is a covalent bridging group selected from dialkyl, alkylaryl or diaryl silicon, or hydrocarbyl radical,
n, m and p are respectively $0 \leq n \leq 4$, $0 \leq m \leq 4$ and $1 \leq p \leq 4$,

or monocyclopentadienyl IVB transition metal catalyst represented by the formula (Ic) below

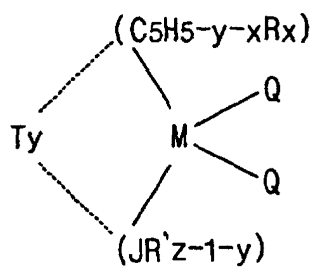

**(Ic)**

where

M is zirconium, Hafnium or titanium having the largest oxidation number (+4, $d^0$ complex),
$(C_5H_{5-y-x}R_x)$ is a cyclopentadienyl compound, herein X is 0, 1, 2, 3, 4 or 5 denoting the number of substituents, R is $C_1$-$C_{20}$ hydrocarbyl radical whose hydrogen can be substituted with halogen, amino, phosphido, alkoxy radical, Lewis' acid group or radical having basic functional group,
$(JR'_{z-1-y})$ is a hetero atom ligand, herein J is a compound from Group VA whose coordination number is 3 or a compound from Group VIA whose coordination number is 2, R' is $C_1$-$C_{20}$ hydrocarbyl radical whose hydrogen can be substituted with halogen, amino, phosphido, alkoxy radical, Lewis' acid group or radical having basic functional group; z is coordination number of J, and y is 0 or 1,
Q is halogen, hydride, unsubstituted or substituted $C_1$-$C_{20}$ hydrocarbyl, alkoxide, allyl oxide, amide, allyl amide, phosphide, allyl phosphide,
T is a covalent bridging group selected from dialkyl, alkylaryl or diaryl silicon, and y is 1.

Said component (B) is the compound represented by the following general formula, and also known per se.

$$M^{n+}(X^-)_{n-g}Z_g$$

wherein, n = 1, 2, 3 or 4, g is an integer such that $0 \leq g < n$; M is a metal selected from the group consisting of Li, Na, Ca, Mg and Ag, or an organic compound containing either C or N,

X is an anion cluster comprising more than three elements, wherein at least one element is O and further element is selected from the group consisting of F, Cl, Br and I,

Z is $H^-$, or F, Cl, Br or I which can form a coordinate bond with M.

Component (C) is an organometallic compound having hydrocarbyl group such as $C_1$-$C_{20}$ alkyl, alkenyl, arylalkyl or allylalkyl, wherein said metal is selected from IA, IIA, IIB or IIIA Group of the Periodic Table of Elements, and also known per se.

The present invention is characterized in using the catalyst system comprising component (A), component (B), and component (C), appropriately blended, for preparing olefin homo- or co-polymers. Said component (B) and component (C) are cocatalysts for activating the metallocene catalyst (A). Therefore, the amount of each component added to the catalyst system should be enough to activate the component (A).

The molar ratio of component (A) to component (B) is 1 : 0.01 ~ 100, preferably 1 : 0.1 ~ 10, more preferably 1 : 1. And, the molar ratio of component (A) to component (C) is 1: 1 ~ 10,000, preferably 1 : 100 ~ 2,000.

Such dialkyl metallocene described includes, for example, bis(cyclopentadienyl)titanium dimethyl, bis(cyclopentadienyl)titanium diphenyl, bis(cyclopentadienyl)zirconium dimethyl, bis(cyclopentadienyl)zirconium diphenyl, bis(cyclopentadienyl)hafnium dimethyl, bis(cyclopentadienyl)hafnium diphenyl, bis(cyclopentadienyl)titanium dineopentyl, bis(cyclopentadienyl)zirconium dineopentyl, bis(cyclopentadienyl)titanium dibenzyl, bis(cyclopentadienyl)vanadium dimethyl.

Mono-alkyl or mono-allyl metallocene are, for example, bis(cyclopentadienyl)titanium methylchloride, bis(cyclopentadienyl)titanium ethylchloride, bis(cyclopentadienyl)titanium penrylchloride, bis(cyclopentadienyl)zirconium methylchloride, bis(cyclopentadienyl)zirconium ethylchloride, bis(cyclopentadienyl)zirconium phenylchloride, bis(cyclopentadienyl)titanium methlybromide, bis(cyclopentadienyl)titanium methyliodide, bis(cyclopentadienyl)titanium ethylbromide, bis(cyclopentadienyl)titanium ethyliodide, bis(cyclopentadienyl)titanium phenylbromide, bis(cyclopentadienyl)titanium phenyliodide, bis(cyclopentadienyl)zirconium methylbromide, bis(cyclopentadienyl)zirconium methyliodide, bis(cyclopentadienyl)zirconium ethylbromide, bis(cyclopentadienyl)zirconium ethyliodide, bis(cyclopentadienyl) zirconium phenyibromide, bis(cyclopentadienyl)zirconium phenyliodide.

Trialkyl metallocene are, for example, cyclopentadienyltitanium trimethyl, cyclopentadienylzirconiumtriphenyl, cyclopentadienyltitaniumtrineopentyl, cyclopentadienylzirconiumtrimethyl, cyclopentadienylhafniumtriphenyl, cyclopentadienylhafniumtrineopentyl, cyclopentadienylhafniumtrimethyl.

Dihalide metallocene are, for example, bis(cyclopentadienyl)titanium dichloride, bis(cyclopentadienyl)zirconium dichloride.

Further, bridged metallocene descibed includes, for example, dimethylsilylbis(1-indenyl)zirconium dibromide, dimethylsilylbis(1-indenyl)zirconium diethyl, dimethylsilylbis(1-indenyl)zirconium dimethoxide, dimethylsilylbis(1-indenyl)zirconium dihydride, dimethylsilylbis(1-indenyl)zirconium chloride bromide, dimethylsilylbis(1-indenyl)zirconium chloride methoxide, - dimethylsilylbis(1-indenyl)zirconium chloride methyl, dimethylsilylbis(1-indenyl)zirconium chloride hydride, dimethylsilyl(9-fluorenyl)(1-cyclopentadienyl)zirconium dichloride, dimethylsilyl(9-fluorenyl)(1-cyclopentadienyl)zirconium dimethyl, dimethylsilyl(9-fluorenyl)(1-cyclopentadienyl)zirconium diethoxide, dimethylsilylbis(9-fluorenyl)zirconium dichloride, dimethylsilylbis(9-fluorenyl)zirconium dimethyl, dimethylsilylbis(9-fluorenyl)zirconium diethoxide, dimethylsilylbis(1-cyclopentadienyl)zirconium dichloride, dimethylsilylbis(1-cyclopentadienyl)zirconium dimethyl, dimethylsilylbis(1-cyclopentadienyl)zirconium diethoxide, dimethylsilylbis(1-indenyl)zirconium dichloride, dimethylsilylbis(1-indenyl)zirconium dimethyl, dimethylsilylbis(1-indenyl)zirconium diethoxide, dimethylsilyl(1-indenyl) (1-cyclopentadienyl)zirconium dichloride, dimethylsilyl(1-indenyl)(1-cyclopentadienyl)zirconium dimethyl, dimethylsilyl (1-indenyl)(1-cyclopentadienyl)zirconium diethoxide, dimethylsilyl(1-indenyl)(9-fluorenyl)zirconium dichloride, dimethylsilyl(1-indenyl)(9-fluorenyl)zirconium dimethyl, dimethylsilyl(1-indenyl)(9-fluorenyl)zirconium diethoxide, dimethylsilyl(9-fluorenyl)(1-cyclopentadienyl)hafnium dichloride, dimethylsilyl(9-fluorenyl)(1-cyclopentadienyl)hafnium dimethyl, dimethylsilyl(9-fluorenyl)(1-cyclopentadienyl)hafnium diethoxide, dimethylsilylbis(9-fluorenyl)hafnium dichloride, dimethylsilylbis(9-fluorenyl)hafnium dimethyl, dimethylsilylbis(9-fluorenyl)hafnium diethoxide, dimethylsilylbis(1-cyclopentadienyl)hafnium dichloride, dimethylsilylbis(1-cyclopentadienyl)hafnium dimethyl, dimethylsilylbis(1-cyclopentadienyl)hafnium diethoxide, dimethylsilylbis(1-indenyl)hafnium dichloride, dimethylsilylbis(1-indenyl)hafnium dimethyl, dimethylsilylbis(1-indenyl)hafnium diethoxide, dimethylsilyl(1-indenyl)(1-cyclopentadienyl)hafnium dichloride, dimethylsilyl(1-indenyl)(1-cyclopentadienyl)hafnium dimethyl, dimethylsilyl(1-indenyl)(1-cyclopentadienyl)hafnium diethoxide, dimethylsilyl(1-indenyl)(9-fluorenyl)hafnium dichloride, dimethylsilyl(1-indenyl)(9-fluorenyl)hafnium dimethyl, dimethylsilyl(1-indenyl)(9-fluorenyl)hafnium diethoxide, 2,2-propyl bis(1-indenyl)zirconium dibromide, 2,2-propyl bis (1-indenyl)zirconium diethyl, 2,2-propyl bis(1-indenyl)zirconium dimethoxide, 2,2-propyl bis(1-indenyl)zirconium dihydride, 2,2-propyl bis(1-indenyl)zirconium chloride bromide, 2,2-propyl bis(1-indenyl)zirconium chloride methoxide, 2,2-propyl bis(1-indenyl)zirconium chloride methyl, 2,2-propyl bis(1-indenyl)zirconium chloride hydride, 2,2-propyl bis (trimethylcyclopentadienyl)zirconium dichloride, 2,2-propyl bis(5-dimethylamino-1-indenyl)zirconium dichloride, 2,2-propyl bis(6-dipropylamino-1-indenyl)zirconium dichloride, 2,2-propyl bis(4,7-bis(dimethylamino)-1-indenyl)zirconium dichloride, 2,2-propyl bis(5-diphenylphosphino-1-indenyl)zirconium dichloride, 2,2-propyl (1-methylamino-9-fluorenyl)(1-cyclopentadienyl)zirconium dichloride, 2,2-propyl (4-butylthio-9-fluorenyl)(1-cyclopentadienyl)zirconium dichloride, 2,2-propyl bis(4,5,6,7-tetrahydro-1-indenyl)zirconium dichloride, 2,2-propyl bis(4-methyl-1-indenyl)zirconium dichloride, 2,2-propyl bis(5-methyl-1-indenyl)zirconium dichloride, 2,2-propyl bis(6-inethyl-1-indenyl)zirconium dichloride, 2,2-propyl bis(7-methyl-1-indenyl)zirconium dichloride, 2,2-propyl bis(5-methoxy-1-indenyl)zirconium dichloride, 2,2-propyl bis(4,7-dimethoxy-1-indenyl)zirconium dichloride, 2,2-propyl bis(2,3-dimethyl-1-indenyl)zirconium dichloride, 2,2-propyl bis(4,7-dimethyl-1-indenyl)zirconium dichloride, 2,2-propyl (9-fluorenyl)(1-cyclopentadienyl) zirconium dichloride, 2,2-propyl (9-fluorenyl)(1-cyclopentadienyl)zirconium dimethyl, 2,2-propyl (9-fluorenyl)(1-cyclopentadienyl)zirconium diethoxide, 2,2-propyl bis(9-fluorenyl)zirconium dichloride, 2,2-propyl bis(9-fluorenyl)zirconium dimethyl, 2,2-propyl bis(9-fluorenyl)zirconium diethoxide, 2,2-propyl bis(1-indenyl)zirconium dichloride, 2,2-propyl bis(1-indenyl)zirconium dimethyl, 2,2-propyl bis(1-indenyl)zirconium diethoxide, 2,2-propyl (1-indenyl)(1-cyclopentadienyl)zirconium dichloride, 2,2-propyl (1-indenyl)(1-cyclopentadienyl)zirconium dimethyl, 2,2-propyl (1-indenyl)(1-cyclopentadienyl)zirconium diethoxide, 2,2-propyl (1-indenyl)(9-fluorenyl)zirconium dichloride, 2,2-propyl (1-indenyl) (9-fluorenyl)zirconium dimethyl, 2,2-propyl (1-indenyl)(9-fluorenyl)zirconium diethoxide, 2,2-propyl (9-fluorenyl)(1-cyclopentadienyl)hafnium dichloride, 2,2-propyl (9-fluorenyl)(1-cyclopentadienyl)hafnium dimethyl, 2,2-propyl (9-fluorenyl)(1-cyclopentadienyl)hafnium diethoxide, 2,2-propyl bis(9-fluorenyl)hafnium dichloride, 2,2-propyl bis(9-fluorenyl) hafnium dimethyl, 2,2-propyl bis(9-fluorenyl)hafnium diethoxide, 2,2-propyl bis(1-cyclopentadienyl)hafnium dichloride, 2,2-propyl bis(1-cyclopentadienyl)hafnium dimethyl, 2,2-propyl bis(1-cyclopentadienyl)hafnium diethoxide, 2,2-propyl bis(1-indenyl)hafnium dichloride, 2,2-propyl bis(1-indenyl)hafnium dimethyl, 2,2-propyl (1-indenyl)(1-cyclopentadienyl) hafnium dimethyl, 2,2-propyl (1-indenyl)(1-cyclopentadienyl)hafnium diethoxide, 2,2-propyl bis(1-indenyl)hafnium diethoxide, 2,2-propyl (1-indenyl)(1-cyclopentadienyl)hafnium dichloride, 2,2-propyl (1-indenyl)(9-fluorenyl)hafnium dichloride, 2,2-propyl (1-indenyl)(9-fluorenyl)hafnium dimethyl, 2,2-propyl (1-indenyl)(9-fluorenyl)hafnium diethoxide, diphenylmethyl bis(1-indenyl)zirconium dibromide, diphenylmethyl bis(1-indenyl)zirconium diethyl, diphenylmethyl bis (1-indenyl)zirconium dimethoxide, diphenylmethyl bis(1-indenyl)zirconium dihydride, diphenylmethyl bis(1-indenyl)zirconium chloride bromide, diphenylmethyl bis(1-indenyl)zirconium chloride methoxide, diphenylmethyl bis(1-indenyl) zirconium chloride methyl, diphenylmethyl bis(1-indenyl)zirconium chloride hydride, diphenylmethyl (9-fluorenyl)(1-cyclopentadienyl)zirconium dichloride, diphenylmethyl (9-fluorenyl)(1-cyclopentadienyl)zirconium dimethyl, diphenylmethyl (9-fluorenyl)(1-cyclopentadienyl)zirconium diethoxide, diphenylmethyl bis(9-fluorenyl)zirconium dichloride, diphenylmethyl bis(9-fluorenyl)zirconium dimethyl, diphenylmethyl bis(9-fluorenyl)zirconium diethoxide, diphenylmethyl bis (1-cyclopentadienyl)zirconium dichloride, diphenylmethyl bis(1-cyclopentadienyl)zirconium dimethyl, diphenylmethyl bis(1-cyclopentadienyl)zirconium diethoxide, diphenylmethyl bis(1-indenyl)zirconium dichloride, diphenylmethyl bis (1-indenyl)zirconium dimethyl, diphenylmethyl bis(1-indenyl) zirconium diethoxide, diphenylmethyl (1-indenyl)(1-cyclopentadienyl)zirconium dichloride, diphenylmethyl (1-indenyl)(1-cyclopentadienyl)zirconium dimethyl, diphenylmethyl (1-indenyl)(1-cyclopentadienyl)zirconium diethoxide, diphenylmethyl (1-indenyl)(9-fluorenyl)zirconium dichloride, diphenylmethyl (1-indenyl)(9-fluorenyl)zirconium dimethyl, diphenylmethyl (1-indenyl)(9-fluorenyl)zirconium diethoxide, diphenylmethyl (9-fluorenyl)(1-cyclopentadienyl)hafnium dichloride, diphenylmethyl (9-fluorenyl)(1-cyclopentadienyl)hafnium dimethyl, diphenylmethyl (9-fluorenyl)(1-cyclopentadienyl)hafnium diethoxide, diphenylmethyl bis(9-fluorenyl)hafnium dichloride, diphenylmethyl bis(9-fluorenyl)hafnium dimethyl, diphenylmethyl bis(9-fluorenyl)hafnium diethoxide, diphenylmethyl bis(1-cyclopentadienyl)hafnium dichloride, diphenylmethyl bis(1-cyclopentadienyl)hafnium dimethyl, diphenylmethyl bis(1-cyclopentadienyl)hafnium diethoxide, diphenylmethyl bis(1-indenyl)hafnium dichloride, diphenylmethyl bis(1-indenyl)hafnium dimethyl, diphenylmethyl bis(1-indenyl) hafnium diethoxide, diphenylmethyl (1-indenyl)(1-cyclopentadienyl)hafnium dichloride, diphenylmethyl (1-indenyl)(1-cyclopentadienyl)hafnium dimethyl, diphenylmethyl (1-indenyl)(1-cyclopentadienyl)hafnium diethoxide, diphenylmethyl (1-indenyl)(9-fluorenyl)hafnium dichloride, diphenylmethyl (1-indenyl)(9-fluorenyl)hafnium dimethyl, diphenylmethyl (1-indenyl)(9-fluorenyl)hafnium diethoxide, diphenylsilyl bis(1-indenyl)zirconium dibromide, diphenylsilyl bis(1-indenyl)zirconium diethyl, diphenylsilyl bis(1-indenyl)zirconium dimethoxide, diphenylsilyl bis(1-indenyl)zirconium dihydride, diphenylsilyl bis(1-indenyl)zirconium chloride bromide, diphenylsilyl bis(1-indenyl)zirconium chloride methoxide, diphenylsilyl bis(1-indenyl)zirconium chloride methyl, diphenylsilyl bis(1-indenyl)zirconium chloride hydride, diphenylsilyl (9-fluorenyl)(1-cyclopentadienyl) zirconium dichloride, diphenylsilyl (9-fluorenyl)(1-cyclopentadienyl)zirconium dimethyl, diphenylsilyl (9-fluorenyl)(1-cyclopentadienyl)zirconium diethoxide, diphenylsilyl (9-fluorenyl)zirconium dichloride, diphenylsilyl (9-fluorehyl)zirconium dimethyl, diphenylsilyl (9-fluorenyl)zirconium diethoxide, diphenylsilyl (1-cyclopentadienyl)zirconium dichloride, diphenylsilyl (1-cyclopentadienyl)zirconium dimethyl, diphenylsilyl (1-cyclopentadienyl)zirconium diethoxide, diphenylsilyl (1-indenyl)zirconium dichloride, diphenylsilyl (1-indenyl)zirconium dimethyl, diphenylsilyl (1-indenyl) zirconium diethoxide, diphenylsilyl (1-indenyl)(1-cyclopentadienyl)zirconium dichloride, diphenylsilyl (1-indenyl)(1-cyclopentadienyl)zirconium dimethyl, diphenylsilyl (1-indenyl)(1-cyclopentadienyl)zirconium diethoxide, diphenylsilyl (1-indenyl) (9-fluorenyl)zirconium dichloride, diphenylsilyl (1-indenyl)(9-fluorenyl)zirconium dimethyl, diphenylsilyl (1-indenyl) (9-fluorenyl)zirconium diethoxide, diphenylsilyl (9-fluorenyl)(1-cyclopentadienyl)hafnium dichloride, diphenylsilyl (9-fluorenyl)(1-cyclopentadienyl)hafnium dimethyl, diphenylsilyl (9-fluorenyl)(1-cyclopentadienyl)hafnium diethoxide, diphenylsilyl bis(9-fluorenyl)hafnium dichloride, diphenylsilyl bis(9-fluorenyl)hafnium dimethyl, diphenylsilyl bis(9-fluorenyl) hafnium diethoxide, diphenylsilyl bis(1-cyclopentadienyl)hafnium dichloride, diphenylsilyl bis(1-cyclopentadienyl)hafnium dimethyl, diphenylsilyl bis(1-cyclopentadienyl)hafnium diethoxide, diphenylsilyl bis(1-indenyl)hafnium dichloride,

diphenylsilyl bis(1-indenyl)hafnium dimethyl, diphenylsilyl bis(1-indenyl) hafnium diethoxide, diphenylsilyl bis(1-indenyl)(1-cyclopentadienyl)hafnium dichloride, diphenylsilyl bis(1-indenyl)(1-cyclopentadienyl)hafnium dimethyl, diphenylsilyl bis(1-indenyl)(1-cyclopentadienyl)hafnium diethoxide, diphenylsilyl bis(1-indenyl)(9-fluorenyl)hafnium dichloride, diphenylsilyl bis(1-indenyl)(9-fluorenyl)hafnium dimethyl, diphenylsilyl bis(1-indenyl)(9-fluorenyl)hafnium diethoxide, ethylene bis(1-indenyl)zirconium dibromide, ethylene bis(1-indenyl)zirconium diethyl, ethylene bis(1-indenyl)zirconium dimethoxide, ethylene bis(1-indenyl)zirconium dihydride, ethylene bis(1-indenyl)zirconium chloride bromide, ethylene bis(1-indenyl)zirconium chloride methoxide, ethylene bis(1-indenyl)zirconium chloride methyl, ethylene bis (1-indenyl)zirconium chloride hydride, ethylene bis(trimethylcyclopentadienyl)zirconium dichloride, ethylene bis (5-dimethylamino-1-indenyl)zirconium dichloride, ethylene bis(6-dipropylamino-1-indenyl)zirconium dichloride. ethylene bis(4,7-bis(dimethylamino)-1-indenyl)zirconium dichloride, ethylene bis(5-diphenylphosphino-1-indenyl)zirconium dichloride, ethylene (1-dimethylamino-9-fluorenyl)(1-cyclopentadienyl)zirconium dichloride, ethylene (4-butylthio-9-fluorenyl)(1-cyclopentadienyl)zirconium dichloride, ethylene bis(4,5,6,7-tetrahydro-1-indenyl)zirconium dichloride, ethylene bis(4-methyl-1-indenyl)zirconium dichloride, ethylene bis(5-methyl-1-indenyl)zirconium dichloride, ethylene bis (6-methyl-1-indenyl)zirconium dichloride, ethylene bis(7-methyl-1-indenyl)zirconium dichloride, ethylene bis(5-methoxy-1-indenyl)zirconium dichloride, ethylene bis(4,7-methoxy-1-indenyl)zirconium dichloride, ethylene bis(2,3-methoxy-1-indenyl)zirconium dichloride, ethylene bis(4,7-methoxy-1-indenyl)zirconium dichloride, ethylene (9-fluorenyl) (1-cyclopentadienyl)zirconium dichloride, ethylene (9-fluorenyl)(1-cyclopentadienyl)zirconium dimethyl, ethylene (9-fluorenyl)(1-cyclopentadienyl)zirconium diethoxide, ethylene bis(9-fluorenyl)zirconium dichloride; ethylene bis(9-fluorenyl)zirconium dimethyl, ethylene bis(9-fluorenyl)zirconium diethoxide, ethylene bis(1-cyclopentadienyl)zirconium dichloride, ethylene bis(1-cyclopentadienyl)zirconium dimethyl, ethylene bis(1-cyclopentadienyl)zirconium diethoxide, ethylene bis(1-indenyl)zirconium dichloride, ethylene bis(1-indenyl)zirconium dimethyl, ethylene bis(1-indenyl) zirconium diethoxide, ethylene (1-indenyl)(1-cyclopentadienyl)zirconium dichloride, ethylene (1-indenyl)(1-cyclopentadienyl)zirconium dimethyl, ethylene (1-indenyl)(1-cyclopentadienyl)zirconium diethoxide, ethylene (1-indenyl)(9-fluorenyl)zirconium dichloride, ethylene (1-indenyl)(9-fluorenyl)zirconium dimethyl, ethylene (1-indenyl)(9-fluorenyl)zirconium diethoxide, ethylene (9-fluorenyl)(1-cyclopentadienyl)hafnium dichloride, ethylene (9-fluorenyl)(1-cyclopentadienyl)hafnium dimethyl, ethylene (9-fluorenyl)(1-cyclopentadienyl)hafnium diethoxide, ethylene bis(9-fluorenyl)hafnium dichloride, ethylene bis(9-fluorenyl)hafnium dimethyl, ethylene bis(9-fluorenyl)hafnium diethoxide, ethylene bis(1-cyclopentadienyl)hafnium dichloride, ethylene bis(1-cyclopentadienyl)hafnium dimethyl, ethylene bis(1-cyclopentadienyl)hafnium diethoxide, ethylene bis(1-indenyl)hafnium dichloride, ethylene bis(1-indenyl)hafnium dimethyl, ethylene bis(1-indenyl) hafnium diethoxide, ethylene (1-indenyl)(1-cyclopentadienyl)hafnium dichloride, ethylene (1-indenyl) (1-cyclopentadienyl)hafnium dimethyl, ethylene (1-indenyl)(1-cyclopentadienyl)hafnium diethoxide, ethylene (1-indenyl)(9-fluorenyl)hafnium dichloride, ethylene (1-indenyl)(9-fluorenyl)hafnium dimethyl, ethylene (1-indenyl)(9-fluorenyl) hafnium diethoxide.

Monocyclopentadienyl metallocene includes, for example, dimethylsilyltetramethyl cyclopentadienyl-tert-butylamido zirconium dichloride, dimethylsilyltetramethyl cyclopentadienyl-tert-butylamido hafnium dichloride, dimethylsilyltert-butylcyclopentadienyl-tert-butylamido zirconium dichloride, dimethylsilyltert-butylcyclopentadienyl-tert-butylamido hafnium dichloride, dimethylsilyltrimethylsilyl cyclopentadienyl-tert-butylamido zirconium dichloride, dimethylsilyltetramethyl cyclopentadienyl-phenylamido zirconium dichloride, dimethylsilyltetramethyl cyclopentadienyl-phenylamido hafnium dichloride; methylphenylsilyltetramethyl cyclopentadienyl-tert-butylamido zirconium dichloride, methylphenylsilyltetramethyl cyclopentadienyl-tert-butylamido hafnium dichloride, methylphenylsilyltetramethyl cyclopentadienyl-tert-butylamido zirconium dimethyl; methylphenylsilyltetramethyl cyclopentadienyl-tert-butylamido zirconium dichloride, dimethylsilyltetramethyl cyclopentadienyl-p-n-phenylamido zirconium dichloride, dirnethylsilyltetramethyl cyclopentadienyl-p-n-butylamido hafnium dichloride.

Further, the component (A) can be used in supported form, considering process limiting factors and following characteristics:

1) Shape and particle size can be controlled so that polymers having any shape and particle size can be obtained using Reprica phenomenon.
2) High bulk density of polymer can be obtained by increasing surface concentration of activated compound.
3) Collision between activated compounds is controlled so that their activity is maintained for hours and thermostability is increased whereby to improve productivity remarkably.
4) As gas phase polymerization may be conducted, manufacturing cost is decreased.
5) The catalyst may be stored for a long period of time, which makes the polymerization operation simple.
6) Heat of polymerization is easily removable by the action of carrier.

As described above, metallocene catalyst may be supported on silica, alumina or magnesium, etc., by the process of:

1) applying metallocene to Lewis' acidic alumina or magnesium chloride, then adding $AlR_3$ so as to form stable cation complex; or
2) fixed-supporting MAO with hydroxy group on surface of silica or alumina, then adding $AlR_3$ for alkylation.

can be used for supporting.

Both perchlorates and chlorates can be used as cation activators, the component (B) of the present invention.

Perchlorates are, for example, $LiClO_4$, $Ca(ClO_4)_2$, $Mg(ClO_4)_2$, $NaClO_4$, $AgClO_4$, $LiIO_4$, $Ca(IO_4)_2$, $Mg(IO_4)_2$, $NaIO_4$, $AgIO_4$, etc. $Mg(ClO_4)_2$ and $AgClO_4$ are most preferable.

Chlorates are, for example, $LiClO_3$, $Ca(ClO_3)_2$, $Mg(ClO_3)_2$, $NaClO_3$, $AgClO_3$, $LiIO_3$, $Ca(IO_3)_2$, $Mg(IO_3)_2$, $NaIO_3$, $AgIO_3$, etc.

Also, others such as $Ph_3C \cdot ClO_4$, $Cl_3C \cdot ClO_4$, $NBu_4 \cdot ClO_4$, $Ph_3C \cdot 10_4$, $Cl_3C \cdot IO_4$ and $NBu_4 \cdot IO_4$ can be used.

As the compound (C) of the present invention, organometallic compounds having hydrocarbyl group such as $C_1$-$C_{20}$ alkyl, alkenyl, arylalkyl or allylalkyl, said metal being from IA, IIA, IIB, IIIA Group of the Periodic Table of Elements are preferable. Alkylating agents such as alkylaluminum, alkyl magnesium, alkyl zinc, etc are more preferable. For example, alkylaluminum are trimethylaluminum, triethylaluminum, triisobutylaluminum, diethylaluminum chloride, ethylaluminum sesquichloride, etc., alkyl magnesium are butyloctyl magnesium, butylethyl magnesium, dihexyl magnesium, etc., and, alkyl zinc are diethyl zinc, etc.

The catalyst system of the present invention can be prepared by contacting said components (A), (B) and (C) in any order [if component (B) / component (A) < 500, homogeneous composition is obtained, while component (B) / component (A) > 500, heterogeneous composition is obtained]. Contacting can be carried out in a known method. Generally, it is preferable to contact the components at a temperature ranging from 0 to 100°C, and the contacting time is preferably from about 10 minutes to 5 hours. Components are contacted each other under stirring. As to the contacting order, a method of processing said component (A), component (B) and component (C) simultaneously, a method of processing component (A) and component (B) and then adding component (C) thereto, and a method of processing component (A) and component (C) and then adding component (B) thereto can be used. However, molecular weight or its distribution of produced polymer may be changed depending on contacting method or order, since active site condition of metallocene catalyst system may be changed thereby.

It is preferable to contact the components under the presence of dispersing agent. Dispersing agent such as hydrocarbon, halogenated hydrocarbon, dialkyl siloxane, etc. can be used. Hydrocarbon is, for example, hexane, heptane, toluene, cyclohexane, etc., halogenated hydrocarbon is, for example, n-butyl chloride, 1,2-dichloroethane, carbon tetrachloride, chlorobenzene, etc., and dialkyl siloxane is, for example, dimethyl polysiloxane, methyl-phenyl polysiloxane, etc.

Comonomers such as straight or branched $C_3$-$C_{20}$ monoolefin, $\alpha$-olefin substituted aromatic compounds, and diene compounds can be used in the preparation of copolymers of the present invention.

Examples of $\alpha$-olefin are straight monoolefin such as propylene, butene-1, hexene-1, octene-1, nonene-1, decene-1, dodecene-1, hexadecene-1, icocene-1; branched monoolefin such as 3-methylbutene-1, 3-methylpentene-1, 4-methylpentene-1, 2-ethylhexene-1, 2,2,4-trimethylpentene-1; and monoolefin substituted with aromatic compound such as styrene, styrene substituted with alkyl.

Diene compounds are straight or branched dienes having $C_4$-$C_{20}$, for example, 1,3-butadiene, 1,4-hexadiene, 1,5-hexadiene, 1,6-heptadiene, 1,7-octadiene, 1,8-nonadiene, 1,9-decadiene, 2-methyl-1,4-pentadiene, 2,5-dimethyl-1,5-hexadiene, 1,4-dimethyl-4-t-butyl-2,6-heptadiene, 1,5,9-decatriene, etc.

Catalyst of the present invention is efficacious for preparing olefin homopolymers and ethylene/ $\alpha$-olefin copolymers. For polymerization, all known methods such as solution phase polymerization, high temperature-high pressure polymerization, slurry phase polymerization, gas phase polymerization can be used. Temperature for polymerization ranges -40°C ~ 220°C, preferably 10°C ~ 200°C, more preferably 40°C ~ 160°C.

By using the catalyst system according to the present invention, polyolefins having a narrow molecular weight distribution and composition distribution are obtainable. Employed at high temperature (130-160°C), the catalyst system did not accompany any problems in its activity and molecular weight of products, which were usually found in conventional catalyst system. Further, by using the catalyst system of the present invention, it is possible to lower manufacturing cost of polymers to a level when Ziegler-Natta catalyst (about 6,000-10,000won/ton PE) is used. These characteristics of the catalyst system of the present invention are advantageous for industrial use, and important considering the catalyst system itself.

Furthermore, ethylene copolymers having high molecular weight and good physical properties can be prepared with high yield, by using the catalyst system of the present invention. According to the present invention, a mixture of ethylene and $C_3$-$C_{20}$ $\alpha$-olefin can be polymerized in a solvent or high pressure autoclave at -40-220°C, under 1-3,000 atm such that the comonomer may be incorporated by 80wt%. Since the density of polymer to be produced is not limited by processing factors when the polymerization is carried out in a solvent or high pressure autoclave polymerization, copolymers in wide range of density (0.86-0.96g/$cm^3$) from VLDPE to HDPE can be synthesized.

A more complete appreciation of the present invention will be realized by reference to the following examples. The following examples are not intended to limit the invention disclosed herein but given only by way of illustration.

## Example

### Example 1

< Preparation of catalyst system >

0.34g(0.84mmol) of bis(n-butylcyclopentadienyl)zirconium dichloride is placed in dried Schlenk type reactor (100ml) with magnetic bar under nitrogen atmosphere. To this reactor is added 30ml of toluene solvent dried for about 2 hours by distillation apparatus wherein sodium/benzophenone has been added, until bis(n-butylcyclopentadienyl) zirconium dichloride is completely dissolved. Then, 0.19g (0.84mmol) of magnesium perchlorate[$Mg(ClO_4)_2$] is dropped, and the solution thus obtained is stirred for 3 hours at room temperature under nitrogen atmosphere. Pale yellow homogeneous solution of the complex produced by reaction of bis(n-butylcyclopentadienyl)zirconium dichloride and $Mg(ClO_4)_2$, which is completely dissolved in solution, is obtained. 1ml of the solution is added to another Schlenk type reactor(100ml), and diluted in 92ml of toluene for preparing catalyst solution(1).

< Ethylene polymerization >

50ml of toluene, 1ml of 1M triisobutylaluminum, and said catalyst solution(1) are added sequentially to 100ml of high pressure autoclave with magnetic bar therein under nitrogen atmosphere. Then, 5 ℓ of ethylene is introduced through the gas flow meter, and the mixture is stirred to react at 70°C for an hour. Methanol is added to the polymer thus produced to stop the reaction, and non-reacted ethylene removed, then the polymer is added to 500ml of methanol. After a small amount of hydrochloric acid is added, and the mixture is stirred for 6 hours to remove catalysts remnant. The polymer is filtered, dried in vacuum oven at 50°C for 8 hours to obtain 6.14g of polyethylene(see Table 1). This polymer is analysed at 145°C with gel permeation chromatography (GPC, Waters 150C) using 1,2,4-trichlorobenzene as a solvent, and molecular weight and molecular weight distribution of polyethylene is measured(Mn=112,000, Mw=280,000, Mw/Mn=2.5 on the basis of polystyrene).

### Comparative example 1

Polymerization is carried out at the same condition and with the same method as in Example 1 except that 10ml of bis(n-butylcyclopentadienyl)zirconium dichloride without cation activator is used instead of catalyst solution (1). As a Result, a very small amount of polymer is obtained.

### Comparative example 2

Polymerization is carried out at the same condition and with the same method as in Example 1 except that 0.34g(0.84mmol) of bis(n-butylcyclopentadienyl)zirconium dichloride with 2ml(2mol) of MAO instead of cation activator is used. As a result, 4.24g of polymer is obtained. Upon GPC analysis, molecular weight and molecular weight distribution is Mn=140,000, Mw/Mn=2.1, respectively.

### Example 2-8

Polymerization is carried out at the same condition and with the same method as in Example 1 except that triisobutyl aluminum(Example 2-4), trimethyl aluminum(Example 5), triethyl aluminum(Example 6), butyloctylmagnesium(Example 7) or diethyl aluminum chloride(Example 8) is used as an alkylating agent. The result is shown in Table 1.

Table 1

| Example | cocatalyst | Al/Zr | polymerization activity (g-PE/mol-Zr) | Tm (°C) | ΔH (J/g) | Mw | Mw/Mn |
|---|---|---|---|---|---|---|---|
| 1 | TIBA | 3300 | $1.5\times10^7$ | 132 | 158 | 280,000 | 2.5 |
| 2 | TIBA | 7 | $1.2\times10^4$ | - | - | - | - |
| 3 | TIBA | 500 | $9.1\times10^5$ | 131 | 162 | 360,000 | 1.8 |

Table 1 (continued)

| Example | cocatalyst | Al/Zr | polymerization activity (g-PE/mol-Zr) | Tm (°C) | ΔH (J/g) | Mw | Mw/Mn |
|---|---|---|---|---|---|---|---|
| 4 | TIBA | 1600 | $1.7\times10^7$ | 131 | 161 | 280,000 | 2.0 |
| 5 | TMA | 3300 | $2.4\times10^6$ | 132 | 167 | - | - |
| 6 | TEA | 3300 | $3.6\times10^6$ | - | - | 480,000 | 2.1 |
| 7 | BOM | 3300 | $2.0\times10^3$ | - | - | - | - |
| 8 | DEAC | 3300 | Trace | - | - | - | - |

polymerization condition ; 100ml autoclave, polymerization temperature ; 70°C, catalyst ; (1), ethylene ; 5ℓ, reaction time ; 1 hour solvent ; toluene, Mg/Zr(mol/mol) ; 1

**Example 9-12**

Polymerization is carried out using catalyst (1) at the same condition and with the same method as in Example 1 except that cation activator is changed. The result is shown in Table 2.

Table 2

| Example | cation activator | polymerization activity (g-PE/mol-Zr) | Mw | Mw/Mn |
|---|---|---|---|---|
| 9 | $AgClO_4$ | $4.3\times10^6$ | | |
| 10 | $AgClO_3$ | $2.6\times10^6$ | - | - |
| 4 | $Mg(ClO_4)_2$ | $1.7\times10^7$ | 280,000 | 2.0 |
| 11 | $Mg(IO_4)_2$ | $2.5\times10^6$ | - | - |
| 12 | $Ph_3C \cdot ClO_4$ | $2.3\times10^6$ | - | - |

polymerization condition ; 100ml autoclave, catalyst ; (1), cocatalyst ; TIBA(1ml, 1M solution), ethylene ; 5ℓ, reaction time ; 1 hour, solvent ; toluene, Al/Zr(mol/mol) ; 1600, Mg/Metal(mol/mol) ; 1, reaction temperature ; 70°C

**Example 13-15**

Polymerization is carried out using catalyst (1) at the same condition and with the same method as in Example 1 except that the concentration ratio of $Mg(ClO_4)_2$ to Zr is changed from 1 to 1000. The result is shown in Table 3.

Table 3

| Example | Mg/Zr (mol/mol) | Activity (g-PE/mol-Zr) | Remarks |
|---|---|---|---|
| 4 | 1 | $1.7\times10^7$ | homogeneous polymerization |
| 13 | 10 | $4.3\times10^6$ | homogeneous polymerization |
| 14 | 100 | $4.7\times10^6$ | homogeneous polymerization |

Table 3 (continued)

| Example | Mg/Zr (mol/mol) | Activity (g-PE/mol-Zr) | Remarks |
|---|---|---|---|
| 15 | 960 | $1.3\times10^5$ | heterogeneous polymerization |
| polymerization condition ; 100ml autoclave, catalyst ; (1), cocatalyst ; TIBA(1ml, 1M), ethylene ; 5ℓ, reaction time ; 1 hour, solvent ; toluene(50ml), Al/Zr(mol/mol) ; 1600, reaction temperature ; 70°C | | | |

**Example 16-17**

Polymerization is carried out at the same condition and with the same method as in Example 1 except that other transition metal complex is used instead of bis(n-butylcyclopentadienyl)zirconium dichloride. The result is shown in Table 4.

Table 4

| Example | transition metal complex | activity (g-PE/mol-Zr) | Mw | Mw/Mn |
|---|---|---|---|---|
| 4 | $(n\text{-}BuCp)_2ZrCl_2$ | $1.7\times10^7$ | 280,000 | 2.0 |
| 16 | CGC[a] | $1.3\times10^7$ | 150,600 | 2.1 |
| 17 | $rac\text{-}Et(Ind)_2ZrCl_2$ | $1.5\times10^7$ | 116,200 | 2.2 |
| polymerization condition ; 100ml autoclave, cocatalyst ; TIBA(1ml, 1M solution), ethylene ; 5ℓ, reaction time ; 1 hour, polymerization temperature ; 70°C Al/Zr(mol/mol) ; 1600, Mg/Zr(mol/mol) ; 1, a ; (t-butylamido)dimethyl(tetramethylcyclopentadienyl)silanedtanium dichloride | | | | |

**Example 18-20**

Polymerization is carried out at the same condition and with the same method as in Example 1 except that ethylene and hydrogen are used at the same time. The result is shown in Table 5.

Table 5

| Example | $H_2$ (mol) | polymerization activity (g-PE/mol-Zr) | Mw | Mw/Mn |
|---|---|---|---|---|
| 4 | 0 | $1.7\times10^7$ | 281,000 | 2.0 |
| 18 | 5 | $9.8\times10^7$ | 153,000 | 2.1 |
| 19 | 10 | $1.1\times10^8$ | 81,000 | 2.0 |
| 20 | 30 | $1.3\times10^7$ | 28,500 | 2.2 |
| polymerization condition ; 100ml autoclave, catalyst ; (1), cocatalyst ; TIBA(lml, 1M solution), ethylene ; 5ℓ, reaction time ; 1 hour, polymerization temperature ; 70°C solvent ; toluene Al/Zr(mol/mol) ; 1600, Mg/Zr(mol/mol) ; 1 | | | | |

**Example 21-24**

Polymerization is carried out using catalyst (1) at the same condition and with the same method as in Example

1 except that polymerization temperature is changed. The result is shown in Table 6.

Table 6

| Example | polymerization temperature (°C) | activity (g-PE/mol-Zr) | Mw | Mw/Mn |
|---|---|---|---|---|
| 21 | 40 | $1.3 \times 10^7$ | 283,000 | 2.2 |
| 4 | 70 | $1.7 \times 10^7$ | 280,000 | 2.0 |
| 22 | 100 | $2.3 \times 10^7$ | 250,000 | 2.1 |
| 23 | 140 | $2.5 \times 10^7$ | 150,000 | 2.0 |
| 24 | 160 | $4.0 \times 10^5$ | 110,000 | 1.8 |
| polymerization condition ; 100ml autoclave,<br>catalyst ; (1), cocatalyst ; TiBA(1ml, 1M solution),<br>ethylene ; 5ℓ, reaction time ; 1 hour,<br>solvent ; toluene<br>Al/Zr(mol/mol) ; 1600, Mg/Zr(mol/mol) ; 1, | | | | |

**Example 25-26**

Polymerization is carried out using catalyst (1) at the same condition and with the same method as in Example 1 except that various solvent is used instead of toluene. The result is shown in Table 7.

Table 7

| Example | solvent | activity (g-PE/mol-Zr) | Mw | Mw/Mn |
|---|---|---|---|---|
| 21 | toluene | $1.7 \times 10^7$ | 283,000 | 2.2 |
| 4 | heptane | $1.3 \times 10^7$ | 240,000 | 2.3 |
| 26 | methylene dichloride | $2.3 \times 10^7$ | 180,000 | 2.1 |
| polymerization condition ; 100ml autoclave,<br>catalyst ; (1), cocatalyst ; TIBA(1ml, 1M solution),<br>ethylene ; 5 ℓ, reaction time ; 1 hour,<br>polymerization temperature ; 70°C<br>Al/Zr(mol/mol) ; 1600, Mg/Zr(mol/mol) ; 1 | | | | |

**Example 27**

< Preparation of catalyst >

12.1mg(0.03mmol) of bis(n-butylcyclopentadienyl)zirconium dichloride is placed in fully dried Schlenk type reactor(100ml) with magnetic bar under nitrogen atmosphere. To this reactor is added 100ml of toluene solvent dried for about 2 hours with distillation apparatus wherein sodium/benzophenone has been added, until bis(n-butylcyclopentadienyl)zirconium dichloride is completely dissolved. Then, 6.7mg(0.03mmol) of magnesium perchlorate[$Mg(ClO_4)_2$] is dropped, and the solution thus obtained is stirred for 3 hours at room temperature under nitrogen. Pale yellow homogeneous solution of the complex produced by reaction of bis(n-butylcyclopentadienyl)zirconium dichloride and $Mg(ClO_4)_2$, which is completely dissolved in solution, is obtained. 1ml of the solution is added to another Schlenk type reactor(100ml), and diluted for preparing catalyst solution(1).

< Ethylene-propylene polymerization >

50ml of toluene, 1ml(1mmol) of triisobutylaluminum, and 1ml($0.03 \times 10^{-2}$mmol-[Zr]) of said catalyst solution (1) are added sequentially to 100ml of high pressure autoclave with magnetic bar therein under nitrogen atmosphere. Then, 0.089mol of ethylene and 0.089mol propylene are introduced quantitatively through the gas flow meter, and the

mixture is reacted at 70°C. After a predetermined time, non-reacted monomer is removed, methanol is added to stop the reaction, then a large amount of methanol is added. After a small amount of hydrochloric acid is added, and the mixture is stirred for 6 hours to remove catalyst remnant. The polymer is filtered, dried in vacuum oven at 50°C for 8 hours to obtain ethylene/propylene copolymer of which activity is 4,500kg-polymer/mol-Zr.hr. This copolymer is analysed at 145°C with gel permeation chromatography(GPC, Waters 150CV) using 1,2,4-trichlorobenzene as solvent, and molecular weight and distribution of molecular weight of polyethylene is measured(Mn=136,000, Mw=462,000, Mw/Mn=3.4 on the basis of polystyrene)(see Table 8).

**Comparative example 3**

Polymerization is carried out at the same condition and with the same method as in Example 27 except that 46.6mg(0.12mmol) of bis(n-butylcyclopentadienyl)zirconium dichloride and 1ml(1mmol) of triisobutyl aluminum without cation activator are used instead of catalyst solution(1). As a result, a very small amount of polymer is obtained.

**Comparative example 4**

Polymerization is carried out at the same condition and with the same method as in Example 27 except that 2mg(0.005mmol) of bis(n-butylcyclopentadienyl)zirconium dichloride with 1ml(3.2mmol) of MAO instead of cation activator is used. As a result, ethylene/propylene copolymer with activity being 1,400 Kg-polymer/mol-Zr.hr is obtained.

**Comparative example 5**

Polymerization is carried out at the same condition and with the same method as in Example 27 except that 1mg(0.0025mmol) of bis(n-butylcyclopentadienyl)zirconium dichloride with 2mg(0.0025mmol) of dimethylanilinium tetrakis(pentafluorophenyl)boron instead of cation activator is used. As a result, ethylene/propylene copolymer of which activity is 830 Kg-polymer/mol-Zr.hr is obtained. Upon GPC analysis, molecular weight and molecular weight distribution is Mw=220,000, Mw/Mn=4.4, respectively.

**Example 28-30**

Polymerization is carried out at the same condition and with the same method as in Example 27 except that (pentamethylcyclopentadienyl)zirconium trichloride(Example 28), ethylene bis(l-indenyl)zirconium dichloride(Example 29), or dimethylsilyltetramethyl cyclopentadienyl-tert-butylamido titanium dichloride(CGC, Example 30) is used as a metallocene catalyst. The result is shown in Table 8a and 8b.

Table 8a

| Example | catalyst | activity (kg-polymer/mol-metal. hour) | concentration of propylene in polymer (mol%) |
|---|---|---|---|
| 27 | $(n\text{-BuCp})_2ZrCl_2$ | 4,500 | 8.0 |
| 28 | $Me_5CpZrCl_3$ | 130 | 1.0 |
| 29 | rac-$Et(Ind)_2ZrCl_2$ | 2,600 | 39.0 |
| 30 | CGC | 490 | 49.0 |

Table 8b

| Example | Tm (°C) | ΔH (J/g) | Mw | Mw/Mn |
|---|---|---|---|---|
| 27 | 105 | 83.7 | 462,000 | 3.4 |
| 28 | 125 | 136.5 | 716,000 | 2.9 |
| 29 | 40 | 7.7 | 91,000 | 3.4 |

Table 8b (continued)

| Example | Tm (°C) | ΔH (J/g) | Mw | Mw/Mn |
|---|---|---|---|---|
| 30 | No peak | - | 288,000 | 3.3 |
| polymerization condition ; 100ml autoclave, polymerization temperature ; 70°C, ethylene ; 0.089mol, $[C_2]/[C_3]$=1, cocatalyst ; TIBA(1ml, 1M solution) solvent ; 50ml of toluene, Mg/Metal(mol/mol) ; 1 | | | | |

**Example 31-33**

Polymerization is carried out at the same condition and with the same method as in Example 27 using catalyst of Example 27, 29 and 30 except that 1-octene is used as a comonomer instead of propylene. The result is shown in Table 9a and 9b.

Table 9a

| Example | catalyst | activity (kg-polymer/mol-metal. hour) | concentration of 1-octene in polymer (mol%) |
|---|---|---|---|
| 31 | $(n\text{-}BuCp)_2ZrCl_2$ | 4,950 | 3.6 |
| 32 | $rac\text{-}Et(Ind)_2ZrCl_2$ | 4,830 | 21.0 |
| 33 | CGC | 760 | 61.0 |

Table 9b

| Example | Tm (°C) | ΔH (J/g) | Mw | Mw/Mn | density ($g/cm^3$) |
|---|---|---|---|---|---|
| 31 | 109 | 67.9 | 635,000 | 4.3 | 0.88 |
| 32 | 89 | 19.6 | 75,000 | 2.8 | 0.86 |
| 33 | No peak | - | 250,000 | 3.2 | - |
| polymerization condition ; 100ml autoclave, polymerization temperature ; 70°C, ethylene ; 0.089mol, $[C_2]/[C_8]$=1, cocatalyst ; TIBA(1ml, 1M solution) solvent ; 50ml of toluene, Mg/Metal(mol/mol) ; 1 | | | | | |

**Comparative example 6**

Polymerization is carried out at the same condition and with the same method as in Example 27 except that 1mg(0.0025mmol) of bis(n-butylcyclopentadienyl)zirconium dichloride with 1ml(3.2mmol) of MAO instead of said cation activator is used. As a result, ethylene/octene copolymer of with activity being 1,140 Kg-polymer/mol-Zr.hr is obtained.

**Comparative example 7**

Polymerization is carried out at the same condition and with the same method as in Example 27 except that 1mg(0.0025mmol) of bis(n-butylcyclopentadienyl)zirconium dichloride with 2mg(0.0025mmol) of dimethylanilinium tetrakis(pentafluorophenyl)boron instead of said cation activator is used. As a result, ethylene/octene copolymer with activity being 1,160 Kg-polymer/mol-Zr.hr is obtained. Upon GPC analysis, molecular weight and molecular weight distribution is Mw=382,000, Mw/Mn=3.4, respectively.

**Example 34-36**

Polymerization is carried out using ethylene bis(I-indenyl)zirconium dichloride used in Example 29 at the same condition and with the same method as in Example 27 except that polymerization temperature is changed. The result is shown in Table 10a and 10b.

Table 10a

| Example | polymerization temperature | activity (kg-polymer/mol-metal. hour) | concentration of propylene in polymer (mol%) |
|---|---|---|---|
| 29 | 70 | 2,600 | 39 |
| 34 | 107 | 21,500 | - |
| 35 | 160 | 78,100 | - |
| 36 | 180 | 85,400 | 26 |

Table 10b

| Example | $T_m$ (°C) | ΔH (J/g) | Mw | Mw/Mn |
|---|---|---|---|---|
| 29 | 40.0 | 7.7 | 91,000 | 3.4 |
| 34 | 104.7 | 12.7 | 83,000 | 3.1 |
| 35 | 111.0 | 20.6 | 53,000 | 3.2 |
| 36 | 114.3 | 19.6 | 51,000 | 3.6 |
| polymerization condition ; 100ml autoclave, ethylene ; 0.089mol, $[C_2]/[C_8]$=1, solvent ; 50ml of toluene, cocatalyst ; TIBA(1ml, 1M solution), Mg/Metal(mol/mol) ; 1 | | | | |

**Claims**

1. A catalyst system for olefin polymerization and copolymerization comprising (A) at least one metallocene compound derived from a transition metal, (B) at least one cation activator as cocatalyst, and (C) at least one alkylating agent,

   wherein said metallocene compound (A) is dialkyl metallocene represented by the formula (Ia) below

$$(CpRn)(CpR'm)MQp \qquad (Ia)$$

   where

   Cp is a cyclopentadienyl, indenyl or fluorenyl,
   Rn and R' m are independently alkyl, phosphine, amine, alkyl ether, or allyl ether groups,
   M is a transition metal from Group IVB or VB of the Periodic Table of Elements,
   Q is alkyl, allyl, allyl alkyl, amide, alkoxy, halogen, sulphide, phosphide,
   n, m and p are $0 \le n \le 5$, $0 \le m \le 5$ and $1 \le p \le 4$, respectively,

   bridged metallocene represented by the formula (Ib) below

$$R''(CpRn)(CpR'm)MQp \qquad (Ib)$$

where

Cp, Rn, R' m, M and Q have the same meaning as defined in formula (Ia),
R" is a covalent bridging group selected from dialkyl, alkylaryl or diaryl silicon, or hydrocarbyl radical,
n, m and p are respectively $0 \leq n \leq 4$, $0 \leq m \leq 4$ and $1 \leq p \leq 4$,

or monocyclopentadienyl IVB transition metal catalyst represented by the formula (Ic) below

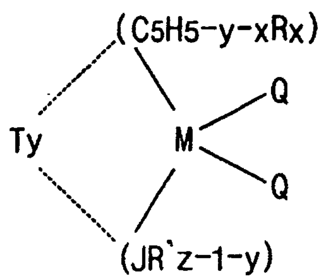

(Ic)

where

M is zirconium, Hafnium or titanium having the largest oxidation number (+4, d° complex),
$(C_5H_{5-y-x}R_x)$ is a cyclopentadienyl compound, herein X is 0, 1, 2, 3, 4 or 5 denoting the number of substituents,
R is $C_1$-$C_{20}$ hydrocarbyl radical whose hydrogen can be substituted with halogen, amino, phosphido, alkoxy radical, Lewis' acid group or radical having basic functional group,
$(JR'_{z-1-y})$ is a hetero atom ligand, herein J is a compound from Group VA whose coordination number is 3 or a compound from Group VIA whose coordination number is 2, R' is $C_1$-$C_{20}$ hydrocarbyl radical whose hydrogen can be substituted with halogen, amino, phosphido, alkoxy radical, Lewis' acid group or radical having basic functional group; z is coordination number of J, and y is 0 or 1,
Q is halogen, hydride, unsubstituted or substituted $C_1$-$C_{20}$ hydrocarbyl, alkoxide, allyl oxide, amide, allyl amide, phosphide, allyl phosphide, T is a covalent bridging group selected from dialkyl, alkylaryl or diaryl silicon, and y is 1;

said cation activator (B) is represented by the formula (II) below

$$M^{n+}(X^-)_{n-g}Z_g \qquad (II)$$

where

n = 1, 2, 3 or 4, and g is an integer such that $0 \leq g < n$,
M is a metal selected from the group consisting of Li, Na, Ca, Mg and Ag, or an organic compound containing either C or N,
X is an anion cluster comprising more than three elements, wherein at least one element is O and further element is selected from the group consisting of F, Cl, Br and I,
Z is $H^-$, or F, Cl, Br or I; and

said alkylating agent (C) is an organometallic compound having hydrocarbyl group such as $C_1$-$C_{20}$ alkyl, alkenyl, arylalkyl or allylalkyl, where said metal is selected from IA, IIA, IIB, IIIA Groups of the Periodic Table of Elements.

2. The catalyst system according to claim 1, wherein said cation activator (B) reacts with said metallocene transition metal complex (A) to form cation of said metallocene transition metal by $X^-$ anion having very weak coordination bonding force whereby to induces olefin polymerization activity.

3. The catalyst system according to claim 1, wherein said cation activator (B) is selected from $LiClO_4$, $NaClO_4$, $Ca(ClO_4)_2$, $Mg(ClO_4)_2$ or $AgClO_4$.

**4.** The catalyst system according to claim 1, wherein said cation activator (B) is selected from $NH_4 \cdot ClO_4$, $Ph_3C \cdot ClO_4$, $Cl_3C \cdot ClO_4$, $NF_4 \cdot ClO_4$, $NBu_4 \cdot ClO_4$.

**5.** The catalyst system according to claim 1, wherein said alkylating agent (C) is alkyl aluminum, alkyl magnesium or alkyl zinc.

**6.** The catalyst system according to claim 5, wherein said alkylating agent (C) is selected from alkyl aluminum, alkyl magnesium or alkyl zinc such as trimethyl aluminum, triethyl aluminum, triisobutyl aluminum, diethyl aluminum chloride, ethyl aluminum sesquichloride, butyl octyl magnesium, butyl ethyl magnesium, dihexyl magnesium or diethyl zinc.

**7.** The catalyst system according to claim 1, wherein the molar ratio of (A) to (B) is 1:0.0 1 - 100, and (A) to (C) is 1: 1 - 10,000.

**8.** The catalyst system according to claim 1, wherein the molar ratio of (A) to (B) is 1:0.01 ~ 10, and (A) to (C) is 1: 100 ~ 2,000.

**9.** The catalyst system according to claim 7, wherein the molar ratio of (A) to (B) is 1:1, and (A) to (C) is 1: 100 ~ 2,000.

**10.** A process for preparing olefin homopolymers using the catalyst system according to any one of claims 1 to 9.

**11.** The process according to claim 10, wherein said olefin is ethylene.

**12.** The process according to claim 10, wherein said polymers are prepared by solution phase polymerization, high temperature-high pressure polymerization, slurry phase polymerization or gas phase polymerization.

**13.** A process for preparing copolymer of ethylene and α-olefin using the catalyst system according to any one of claims 1 to 9.

**14.** The process according to claim 13, wherein said α-olefin is the one substituted with straight or branched $C_3$-$C_{20}$ monoolefin or aromatic groups, or straight or branched $C_4$-$C_{20}$ diene.

**15.** The process according to claim 14, wherein said α-olefin is propylene, butene-1, hexene-1, octene-1, nonene-1, decene-1, dodecene-1, hexadecene-1, icosene-1 or styrene.

**16.** The process according to claim 14, wherein said diene is 1,3-butadiene, 1,4-hexadiene, 1,5-hexadiene, 1,6-heptadiene, 1,7-octadiene, 1,8-nonadiene, 1,9-decadiene, 2-methyl-1,4-pentadiene, 2,5-dimethyl-1,5-hexadiene, 1,4-dimethyl-4-t-butyl-2,6-heptadiene, or 1,5,9-decatriene

**17.** The process according to any one of claims 13 to 16, wherein said polymers are prepared by solution phase polymerization, high temperature-high pressure polymerization, slurry phase polymerization or gas phase polymerization carried out at temperature of -40 ~ 220°C, under pressure of 1 ~ 3,000atm.

## Patentansprüche

**1.** Katalysatorsystem für Olefinpolymerisation und Copolymerisation, umfassend (A) wenigstens eine Metallocenverbindung, die von einem Übergangsmetall abstammt, (B) wenigstens einen Kationenaktivator als Cokatalysator und (C) wenigstens ein Alkylierungsmittel,

wobei die genannte Metallocenverbindung (A) Dialkylmetallocen ist, das durch die folgende Formel (Ia) repräsentiert wird

$$(CpRn)\ (CpR'm)MQp \qquad (Ia)$$

wobei

Cp ein Cyclopentadienyl, Indenyl oder Fluorenyl ist, Rn und R'm unabhängig Alkyl, Phosphin, Amin, Alkylether

oder Allylethergruppen sind,
M ein Übergangsmetall der Gruppe IVB oder VB der Tabelle des Periodensystems der Elemente ist,
Q Alkyl, Allyl, Allylalkyl, Amid, Alkoxy, Halogen, Sulfid, Phosphid ist,
n, m und p jeweils $0 \leq n \leq 5$, $0 \leq m \leq 5$ und $1 \leq p \leq 4$ sind,

überbrücktes Metallocen, das durch die folgende Formel (Ib) repräsentiert wird

$$R''(CpRn)(CpR'm)MQp \qquad (Ib)$$

wobei

Cp, Rn, R'm, M und Q die gleiche Bedeutung wie in Formel (Ia) haben,
R" eine kovalente brückenbildende Gruppe ist, die ausgewählt ist aus Dialkyl, Alkylaryl oder Diarylsilicium oder Hydrocarbylradikal,
n, m und p jeweils $0 \leq n \leq 4$, $0 \leq m \leq 4$ und $1 \leq p \leq 4$ sind,

oder ein Monocyclopentadienyl-IVB-Übergangsmetallkatalysator, der durch die folgende Formel (Ic) repräsentiert wird

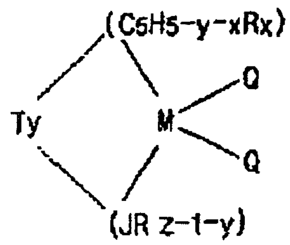

(Ic)

wobei

M Zirconium, Hafnium oder Titan mit der höchsten Oxydationszahl (+4, $d^0$ Komplex) ist,
($C_5H_{5-y-x}R_z$) eine Cyclopentadienylverbindung ist, wobei X 0, 1, 2, 3, 4 oder 5 ist und die Anzahl von Substituenten bedeutet, R $C_1$-$C_{20}$ ein Hydrocarbylradikal ist, dessen Wasserstoff durch Halogen, Amino, Phospido, Alkoxyradikal, eine Lewis-Säuregruppe oder ein Radikal mit basischer funktioneller Gruppe substituiert sein kann,
($JR'_{z-1-y}$) ein Heteroatomligand ist, wobei J hierin eine Verbindung der Gruppe VA ist, deren Koordinationszahl 3 ist, oder eine Verbindung der Gruppe VIA, deren Koordinationszahl 2 ist, R'$C_1$-$C_{20}$ Hydrocarbylradikal ist, dessen Wasserstoff durch Halogen, Amino, Phosphido, Alkoxyradikal, eine Lewis-Säuregruppe oder ein Radikal mit basischer funktioneller Gruppe substituiert sein kann; z die Koordinationszahl von J ist und y 0 oder 1 ist,
Q Halogen, Hydrid, nichtsubstituiertes oder substituiertes $C_1$-$C_{20}$ Hydrocarbyl, Alkoxid, Allyloxid, Amid, Allylamid, Phosphid, Allylphosphid ist,
T eine kovalente brückenbildende Gruppe ist, die ausgewählt ist aus Dialkyl, Alkylaryl oder Diarylsilicium, und y 1 ist;

wobei der genannte Kationenaktivator (B) durch die folgende Formel (II) repräsentiert wird

$$M^{n+}(X^-)_{n-g}Z_g \qquad (II)$$

wobei

n = 1, 2, 3 oder 4 und g eine ganze Zahl wie z.B. $0 \leq g < n$ ist,
M ein Metall ist, das ausgewählt ist aus der Gruppe bestehend aus Li, Na, Ca, Mg und Ag, oder eine organische Verbindung, die entweder C oder N enthält,

X ein Anionen-Cluster ist, das mehr als drei Elemente umfasst, wobei wenigstens ein Element O ist und weitere Elemente ausgewählt sind aus der Gruppe bestehend aus F, Cl, Br und I,
Z $H^-$ oder F, Cl, Br oder I ist; und

das genannte Alkylierungsmittel (C) eine metallorganische Verbindung ist, die eine Hydrocarbylgruppe wie $C_1$-$C_{20}$ Alkyl, Alkenyl, Arylalkyl oder Allylalkyl hat, wobei das genannte Metall ausgewählt ist aus IA, IIA, IIB, IIIA Gruppen der Tabelle des Periodensystems der Elemente.

**2.** Katalysatorsystem nach Anspruch 1, wobei der genannte Kationenaktivator (B) mit dem genannten Metallocen-Übergangsmetallkomplex (A) reagiert, um ein Kation des genannten Metallocen-Übergangsmetalls zu bilden, indem das $X^-$ Anion eine sehr schwache Koordinationsbindekraft besitzt, um Olefinpolymerisationsaktivität hervorzurufen.

**3.** Katalysatorsystem nach Anspruch 1, wobei der genannte Kationenaktivator (B) ausgewählt ist aus $LiClO_4$, $NaClO_4$, $Ca(ClO_4)_2$, $Mg(ClO_4)_2$ oder $AgClO_4$.

**4.** Katalysatorsystem nach Anspruch 1, wobei der genannte Kationenaktivator (B) ausgewählt ist aus $NH_4 \cdot ClO_4$, $Ph_3C \cdot ClO_4$, $Cl_3C \cdot ClO_4$, $NF_4 \cdot ClO_4$, $NBu_4 \cdot ClO_4$.

**5.** Katalysatorsystem nach Anspruch 1, wobei das genannte Alkylierungsmittel (C) Alkylaluminium, Alkylmagnesium oder Alkylzink ist.

**6.** Katalysatorsystem nach Anspruch 5, wobei das genannte Alkylierungsmittel (C) ausgewählt ist aus Alkylaluminium, Alkylmagnesium oder Alkylzink wie Trimethylaluminium, Triethylaluminium, Triisobutylaluminium, Diethylaluminiumchlorid, Ethylaluminiumsesquichlorid, Butyloctylmagnesium, Butylethylmagnesium, Dihexylmagnesium oder Diethylzink.

**7.** Katalysatorsystem nach Anspruch 1, wobei das Molverhältnis von (A) zu (B) 1:0,01 - 100 und von (A) zu (C) 1:1 - 10.000 beträgt.

**8.** Katalysatorsystem nach Anspruch 1, wobei das Molverhältnis von (A) zu (B) 1:0,01 - 10 und von (A) zu (C) 1:100 - 2.000 beträgt.

**9.** Katalysatorsystem nach Anspruch 7, wobei das Molverhältnis von (A) zu (B) 1:1 und von (A) zu (C) 1:100 - 2000 beträgt.

**10.** Verfahren zur Herstellung von Olefinhomopolymeren unter Verwendung des Katalysatorsystems nach einem der Ansprüche 1 bis 9.

**11.** Verfahren nach Anspruch 10, wobei das genannte Olefin Ethylen ist.

**12.** Verfahren nach Anspruch 10, wobei die genannten Polymere durch Lösungsphasenpolymerisation, Hochtemperatur-Hochdruck-Polymerisation, Schlammphasenpolymerisation oder Gasphasenpolymerisation hergestellt werden.

**13.** Verfahren zur Herstellung von Copolymer von Ethylen und $\alpha$-Olefin unter Verwendung des Katalysatorsystems nach einem der Ansprüche 1 bis 9.

**14.** Verfahren nach Anspruch 13, wobei das genannte $\alpha$-Olefin eines ist, das durch gerades oder verzweigtes $C_3$-$C_{20}$ Monoolefin oder aromatische Gruppen oder geradem oder verzweigtem $C_4$-$C_{20}$ Dien substituiert ist.

**15.** Verfahren nach Anspruch 14, wobei das genannte $\alpha$-Olefin Propylen, Buten-1, Hexen-1, Octen-1, Nonen-1, Decen-1, Dodecen-1, Hexadecen-1, Icosen-1 oder Styrol ist.

**16.** Verfahren nach Anspruch 14, wobei das genannte Dien 1,3-Butadien, 1,4-Hexadien, 1,5-Hexadien, 1,6-Heptadien, 1,7-Octadien, 1,8-Nonadien, 1,9-Decadien, 2-Methyl-1,4-pentadien, 2,5-Dimethyl-1,5-hexadien, 1,4-Dimethyl-4-tbutyl-2,6-heptadien oder 1,5,9-Decatrien ist.

**17.** Verfahren nach einem der Ansprüche 13 bis 16, wobei die genannten Polymere durch Lösungsphasenpolymerisation, Hochtemperatur-Hochdruck-Polymerisation, Schlammphasenpolymerisation oder Gasphasenpolymerisation bei einer Temperatur von -40 - 220°C unter einem Druck von 1 - 3000 atm hergestellt werden.

## Revendications

**1.** Système catalyseur de polymérisation et de copolymérisation d'oléfines comprenant (A) au moins un composé de métallocène dérivé d'un métal de transition, (B) au moins un activateur cationique en tant que cocatalyseur, et (C) au moins un agent alkylant,

dans lequel ledit composé de métallocène (A) est du dialkyl-métallocène représenté par la formule (Ia) ci-dessous

(CpRn)(CpR'm)MQp (Ia)

où

Cp est un cyclopentadiényle, un indényle ou un fluorényle,
Rn et R' m sont indépendamment des groupes alkyle, phosphine, amine, alkyl-éther ou allyl-éther,
M est un métal de transition du groupe IVB ou VB du tableau périodique des éléments,
Q est un alkyle, un allyle, un allyl-alkyle, un amide, un alcoxy, un halogène, un sulfure, un phosphure,
n, m et p sont $0 \leq n \leq 5$, $0 \leq m \leq 5$ et $1 \leq p \leq 4$, respectivement,

du métallocène ponté représenté par la formule (Ib) ci-dessous

R" (CpRn)(CpR' m)MQp (Ib)

où

Cp, Rn, R' m, M et Q ont la même signification qu'il est défini dans la formule (Ia)
R" est un groupe de pontage covalent sélectionné parmi le dialkyle, l'alkyl-aryle ou le diaryl-silicium ou un radical hydrocarbyle,
n, m et p sont respectivement $0 \leq n \leq 4$, $0 \leq m \leq 4$ et $1 \leq p \leq 4$,

ou un catalyseur à métal de transition IVB monocyclopentadiényle représenté par la formule (Ic) ci-dessous

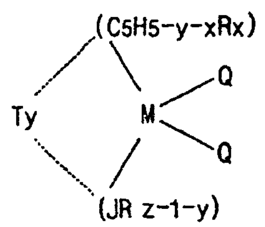

(Ic)

où

M est un zirconium, un hafnium ou un titane ayant le plus grand numéro d'oxydation (+4, d° complexe),
($C_5H_{5-y-x}R_x$) est un composé de cyclopentadiényle, où X est 0, 1, 2, 3, 4 ou 5 dénotant le nombre de substituants, R est un radical hydrocarbyle $C_1$-$C_{20}$ dont l'hydrogène peut être substitué par un halogène, un amino, un phosphido, un radical alcoxy, un groupe d'acide de Lewis ou un radical ayant un groupe fonctionnel basique, ($JR'_{z-1-y}$) est un hétéroatome ligand, où J est un composé du groupe VA dont l'indice de coordination est 3, ou un composé du groupe VIA dont l'indice de coordination est 2, R' est un radical hydrocarbyle $C_1$-$C_{20}$ dont l'hydrogène peut être substitué par un halogène, un amino, un phosphido, un radical alcoxy, un groupe d'acide

de Lewis ou un radical ayant un groupe fonctionnel basique; z est l'indice de coordination de J, et y est 0 ou 1, Q est un halogène, un hydrure, un hydrocarbyle $C_1$-$C_{20}$ non substitué ou substitué, un alcoxyde, un oxyde d'allyle, un amide, un allyl-amide, un phosphure, un phosphure d'allyle, T est un groupe de pontage covalent sélectionné parmi le dialkyle, l'alkyl-aryle ou le diaryl-silicium, et y est 1;

ledit activateur cationique (B) est représenté par la formule (II) ci-dessous

$$M^{n+}(X^{-})_{n-g}Z_g \qquad (II)$$

où

n = 1, 2, 3 ou 4, et g est un entier tel que $0 \leq g \leq n$,
M est un métal sélectionné du groupe consistant en Li, Na, Ca, Mg et Ag, ou un composé organique contenant soit C soit N,
X est une grappe d'ions comprenant plus de trois éléments, dans lequel un élément au moins est O et un autre élément est sélectionné du groupe consistant en F, Cl, Br et I,
Z est $H^-$, ou F, Cl, Br ou I; et

ledit agent alkylant (C) est un composé organométallique ayant un groupe hydrocarbyle tel que alkyle $C_1$-$C_{20}$, alcényle, aryl-alkyle ou allyl-alkyle, où ledit métal est sélectionné des groupes IA, IIA, IIB, IIIA du tableau périodique des éléments.

2. Le système catalyseur de la revendication 1, dans lequel ledit activateur cationique (B) réagit avec ledit complexe de métal de transition de métallocène (A) pour former un cation dudit métal de transition de métallocène, par l'anion X ayant une force de liaison de coordination très faible, ce par quoi induire l'activité de polymérisation d'oléfines.

3. Le système catalyseur selon la revendication 1, dans lequel ledit activateur cationique (B) est sélectionné parmi $LiClO_4$, $NaClO_4$, $Ca(ClO_4)_2$, $Mg(ClO_4)_2$ ou $AgClO_4$.

4. Le système catalyseur selon la revendication 1, dans lequel ledit activateur cationique (B) est sélectionné de $NH_4 \cdot ClO_4$, $Ph_3C \cdot ClO_4$, $Cl_3C \cdot ClO_4$, $NF_4 \cdot ClO_4$, $NBu_4 \cdot ClO_4$.

5. Le système catalyseur selon la revendication 1, dans lequel ledit agent alkylant (C) est de l'alkyl-aluminium, de l'alkyl-magnésium ou de l'alkyl-zinc.

6. Le système catalyseur selon la revendication 5, dans lequel ledit agent alkylant (C) est sélectionné parmi l'alkyl-aluminium, l'alkyl-magnésium ou l'alkyl-zinc, tel que du triméthyl-aluminium, du triéthyl-aluminium, du triisobutyl-aluminium, du chlorure de diéthyl-aluminium, du sesquichlorure d'éthyl-aluminium, du butyl-octyl-magnésium, du butyl-éthyl-magnésium, du dihexyl-magnésium ou du diéthyl-zinc.

7. Le système catalyseur selon la revendication 1, dans lequel le rapport molaire de (A) à (B) est de 1:0,01 ~ 100, et de (A) à (C) est de 1:1~ 10.000.

8. Le système catalyseur selon la revendication 1, dans lequel le rapport molaire de (A) à (B) est de 1:0,01 ~ 10, et de (A) à (C) est de 1:100 ~ 2.000.

9. Le système catalyseur selon la revendication 7, dans lequel le rapport molaire de (A) à (B) est de 1:1, et de (A) à (C) est de 1:100 ~ 2.000.

10. Procédé pour préparer des homopolymères oléfiniques en utilisant un système catalyseur selon l'une quelconque des revendications 1 à 9.

11. Le procédé selon la revendication 10, dans lequel ladite oléfine est de l'éthylène.

12. Le procédé selon la revendication 10, dans lequel lesdits polymères sont préparés par polymérisation à phase en

solution, par polymérisation à haute température-haute pression, par polymérisation à phase en bouillie ou par polymérisation en phase gazeuse.

**13.** Procédé pour préparer un copolymère d'éthylène et une α-oléfine en utilisant le système catalyseur selon l'une quelconque des revendications 1 à 9.

**14.** Le procédé selon la revendication 13, dans lequel ladite α-oléfine est celle substituée par une monooléfine $C_3$-$C_{20}$ droite ou ramifiée ou des groupes aromatiques, ou un diène $C_4$-$C_{20}$ droit ou ramifiée.

**15.** Le procédé selon la revendication 14, dans lequel ladite α-oléfine est du propylène, du butène-1, de l'hexène-1, de l'octène-1, du nonène-1, du décène-1, du dodécène-1, de l'hexadécène-1, de l'isocène-1 ou du styrène.

**16.** Le procédé selon la revendication 14, dans lequel ledit diène est du 1,3-butadiène, du 1,4-hexadiène, du 1,5-hexadiène, du 1,6-heptadiène, du 1,7-octadiène, du 1,8-nonadiène, du 1,9-décadiène, du 2-méthyl-1,4-pentadiène, du 2,5-diméthyl-1,5-hexadiène, du 1,4-diméthyl-4-t-butyl-2,6-heptadiène ou du 1,5,9-décatriène.

**17.** Le procédé selon l'une quelconque des revendications 13 à 16, dans lequel lesdits polymères sont préparés par polymérisation à phase en solution, par polymérisation à haute température-haute pression, par polymérisation à phase en bouillie ou par polymérisation en phase gazeuse, effectuée à une température de -40 ~ 220°C, sous une pression de 1 ~ 3.000 atm.

FIG. 1

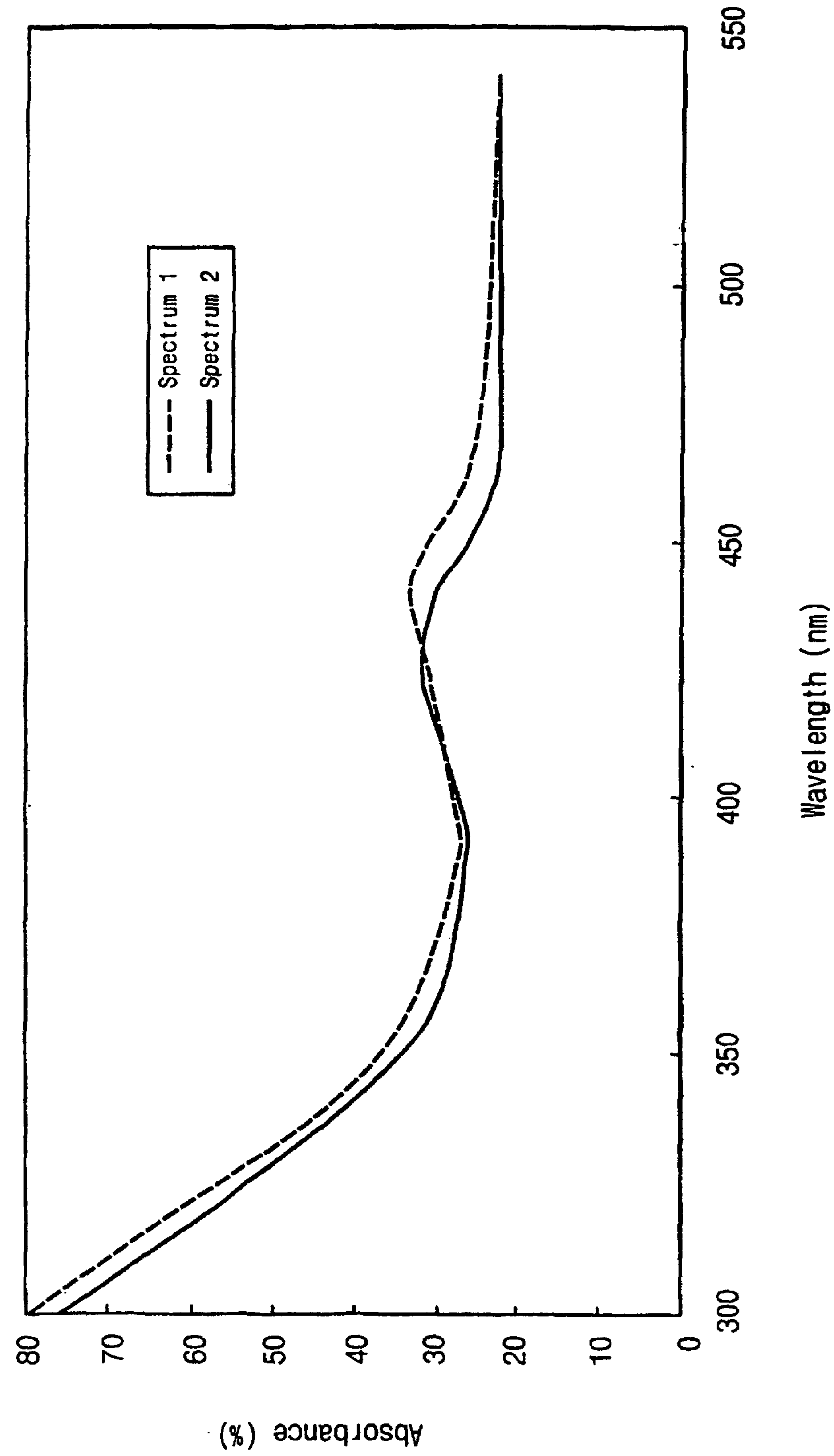
Spectrum 1
Spectrum 2
Absorbance (%)
Wavelength (nm)
0
10
20
30
40
50
60
70
80
300
350
400
450
500
550

FIG. 2

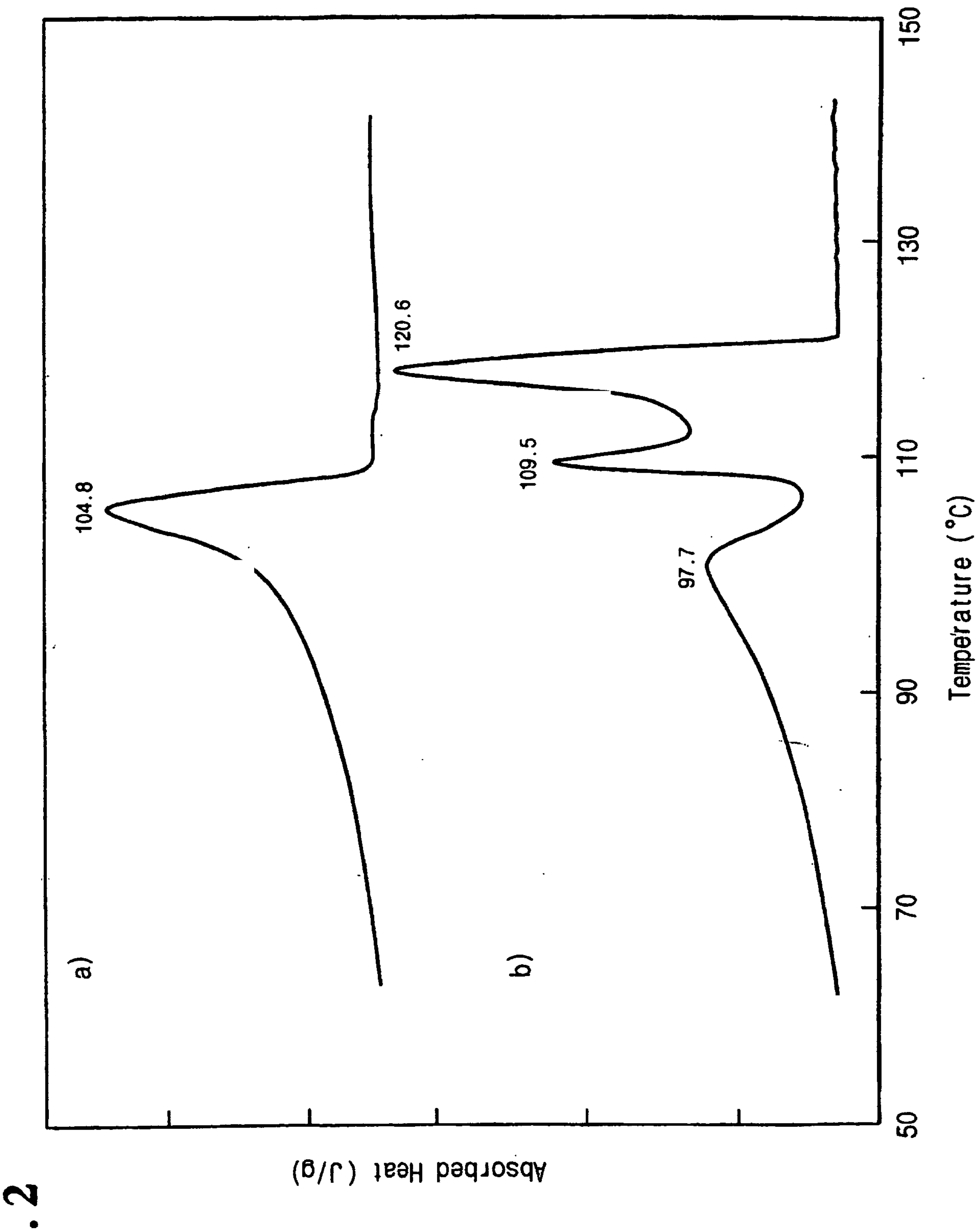
a)
b)
104.8
120.6
109.5
97.7
50
70
90
110
130
150
Temperature (°C)
Absorbed Heat (J/g)